# EUROPÄISCHE PATENTSCHRIFT

(11) **EP 0 949 037 B1**
(45) Veröffentlichungstag und Bekanntmachung des Hinweises auf die Patenterteilung: **07.05.2003**
(21) Anmeldenummer: 99103586.6
(22) Anmeldetag: 24.02.1999
(51) Int. Cl.: B23K 26/14

(54) **Verfahren zum Verschweissen von Blechen**
Sheets welding method
Méthode de soudage de tôles

(30) Priorität: 06.04.1998 DE 19815317
(43) Veröffentlichungstag der Anmeldung: 13.10.1999
(73) Patentinhaber: Bayerische Motoren Werke Aktiengesellschaft, 80788 München (DE); Deutsches Zentrum für Luft- und Raumfahrt e.V., 51147 Köln (DE)
(72) Erfinder: Hornig, Hans, 83536 Gars (DE); Moritz, Peter, 89601 Schelklingen-Hütten (DE); Reichelt, Uwe, 38440 Wolfsburg (DE); Volz, Robert, 70563 Stuttgart (DE)

(56) Entgegenhaltungen:
- DE-A- 19 643 434
- DE-C- 4 141 437

## Beschreibung

Die Erfindung bezieht sich auf ein Verfahren der im Oberbegriff des ersten Anspruchs angegebenen Art.

Aus der EP 0 173 654A ist es bekannt, zum Auftragsschweißen aber auch zur Herstellung von Schweißnähten einen Laserstrahl zu verwenden und gleichzeitig Zusatzwerkstoff zuzuführen, um - beim Herstellen der Schweißnaht - ein Zusatzmaterial für die Verbindungsstelle zur Verfügung zu stellen. Als Schweißnahtformen ist der Stumpfstoß beschrieben. Der Zusatzwerk ist pulverförmig und wird entweder alleine durch Schwerkraft oder mit Hilfe eines Inertgases zur Schweißstelle transportiert. In der Schweißstelle schmilzt er auf und bildet so Material für die Schweißnaht.

Es hat sich herausgestellt, daß dieses Verfahren beim Verschweißen von Aluminiumblechen keine brauchbaren Ergebnisse liefert.

Bisher hat man Aluminiumbleche miteinander verschweißt, indem man ein konventionelles Schmelzschweißverfahren wie das MIG- oder WIG-Verfahren angewandt hat. Diese Verfahren bringen eine hohe Wärmeeintragung in die zu verschweißenden Bleche mit der Folge, daß sich die Bleche bzw. die Karosseriestruktur verzieht.

Damit sind umfangreiche Richtarbeiten notwendig, die teuer und zeitaufwendig sind, so daß diese Verfahren für Karosserie-Außenbleche für Kraftfahrzeuge nur bedingt angewendet werden können. Um diese Schweißverfahren überhaupt einsetzen zu können, mußten die Stoßkanten der Bauteile speziell vorbereitet werden. Als Nahtform wurde üblicherweise der Überlappstoß gewählt.

Aufgabe der Erfindung ist es, Maßnahmen vorzuschlagen, daß das aus der gattungsbildenden Schrift bekannte Laserschweißen mit pulverförmigem Zusatzwerkstoff auch für Aluminiumbleche, insbesondere für Karosserie-Außenbleche von Kraftfahrzeugen, also für Dünnbleche, verwandt werden kann.

Gelöst wird diese Aufgabe durch die Merkmale des ersten Anspruchs. Die Lösung hat den Vorteil, daß eine Nahtvorbereitung der Stoßkanten und auch ein Entfernen der Oxydschicht nicht notwendig ist und daß trotzdem eine Naht erzeugt wird ohne Porösitäten und ohne Einfallstellen sowie ohne die beim Laserschweißen ohne bzw. mit drahtförmigem Zusatzwerkstoff bekannten Krater am Anfang und Ende der Schweißnaht. Durch die Verwendung eines Trägergases kann der Pulvervolumenstrom gezielt gesteuert werden. Da dieses Trägergas unabhängig vom Schutzgasstrom ist, ist auch eine unabhängige Regelung der beiden Gasströme möglich, so daß optimale Bedingungen an der Schweißstelle eingestellt werden können. Ebenso werden aufgrund der wesentlich geringeren Wärmeeinbringung in die Bleche die Richtarbeiten nach dem Schweißen wesentlich verringert bzw. können ganz entfallen. Damit können erhabene Nähte geringer Nahtbreite erzielt werden, die anschließend nachgearbeitet werden. Hierzu wird ein mengenmäßig entsprechend dimensionierter Pulverstrom verwendet.

Ein weiterer Vorteil der Erfindung besteht darin, daß auf einen Wurzelschutz durch Schutzgasbeaufschlagung von der Unterseite zur Fügestelle gänzlich verzichtet werden kann.

Vorteilhafte Ausgestaltungen beschreiben die Unteransprüche.

Durch die in Anspruch 2 genannte Materialkombination konnten homogene porenfreie Schweißverbindungen erzeugt werden.

Die Ansprüche 3 und 4 beschreiben Gase für das Trägergas und das Schutzgas, wobei von den Edelgasen bevorzugt Helium verwendet wird. Es ist aber auch möglich, anstelle eines Edelgases Stickstoff zu verwenden.

Vorteilhaft ist es, daß nur ganz geringe Menge des Trägergases im Bereich von 1 bis 2 Liter pro Minute benötigt werden, um eine ausreichende Menge des Zusatzwerkstoffes zu fördern. Der Schutzgasvolumenstrom ist ebenfalls sehr gering, im Bereich von 5 bis 30 Liter pro Minute. Als Trägergas und/oder Schutzgas wird bei der Verschweißung von Aluminiumblechen ein Edelgas oder Stickstoff bevorzugt.

Der Zusatzwerkstoff wird über eine rohrförmige Fördereinrichtung zugeführt, die einem Winkel von 30 bis 60° zur Achse des Laserstrahles ausgerichtet ist. Als Zusatzwerkstoff haben sich bei der Verschweißung von Aluminiumdünnblechen folgende Aluminiumpulver bewährt: AlSiₙ, AlMgₙ, AlMgₙSiₘ, AlMgMnₘ.

Mit dem beschriebenen Verfahren ist es möglich, auch Zwangslagenschweißungen vorzunehmen und die Düse im dreidimensionalen Raum zu bewegen, ohne daß die Nahtqualität darunter leidet. Damit ist es möglich, auch Bleche zu einer Kraftfahrzeugkarosserie zu verschweißen, bei denen der Nahtverlauf in der Regel nicht in einer Ebene stattfindet.

Üblicherweise werden die zu verschweißenden Aluminiumdünnbleche fest eingespannt in einer Aufnahmevorrichtung um sicherzustellen, daß die Bauteile im Nahtbereich über die gesamte Bauteilkontur zueinander gespannt werden, um eine exakte Wärmeabfuhr und eine exakte Positionierung der Stoßkanten während des Schweißprozesses zu gewährleisten. Der Schweißkopf mit der Zufuhreinrichtung für den Zusatzwerkstoff werden dann entlang der Schweißnaht geführt, beispielsweise von einem Industrieroboter. Hierbei kann ein Industrieroboter eingesetzt werden, der sowohl den Laserschweißkopf wie auch die Zusatzwerkstoffzufuhrvorrichtung führt, letztere kann jedoch auch separat geführt werden.

Bei Versuchsschweißungen wurden folgende Parameter verwendet: Leistung des Lasers 2200 W, Vorschubgeschwindigkeit des Lasers 3 m/min, Schutzgas Helium, das mit 10 l/min zugeführt wurde, als Zusatzwerkstoff wurde AlSi₅ Pulver verwendet, der mit 9,5 g/min zugeführt wurde. Das Trägergas war Stickstoff, der mit 2 l/min zugeführt wurde. Die zu verschweißenden Aluminiumbleche bestanden aus der Legierung AlMg0,4Si1,2.

Ein zweiter Versuch wurde mit dem Zusatzwerkstoff AlSi12 durchgeführt. Hierbei konnte die Laserleistung um 100 Watt reduziert werden bei sonst gleichen übrigen Parametern.

Beide Versuche haben homogene, porenfreie Schweißnähte erzeugt, die auch optischen Anforderungen im Außenhautbereich für den Automobilbau genügen.

## Patentansprüche

1. Verfahren zum Verschweißen von Blechen, insbesondere für Bleche für eine Kraftfahrzeug-Außenhaut, mit Hilfe eines Laserstrahls und eines pulverförmigen Zusatzwerkstoffes, der während des Schweißens in die Schweißstelle geführt wird um beim Herstellen der Schweißnaht ein Zusatzmaterial für die Verbindungsstelle zur Verfügung zu stellen, wobei die Bleche über einen Stumpfstoß miteinander verbunden sind, wobei der Zusatzwerkstoff mit Hilfe eines Trägergases zugeführt wird,
**dadurch gekennzeichnet, dass** als Bleche Aluminiumdünnbleche verwendet werden und dass der aus Trägergas und Pulver bestehende Zusatzwerkstorfstrom von einem Schutzgasmantel umhüllt wird und wobei das Trägergas unabhängig vom Schutzgasstrom ist.

2. Verfahren nach Anspruch 1,
**dadurch gekennzeichnet, dass** die Aluminiumdünnbleche aus einer Aluminiumlegierung AlMgSi bestehen und dass als Zusatzwerkstoff ein Aluminiumpulver AlSiₙ verwendet wird.

3. Verfahren nach Anspruch 1 oder 2,
**dadurch gekennzeichnet, dass** als Trägergas ein Edelgas oder Stickstoff verwendet wird.

4. Verfahren nach einem der vorangegangenen Ansprüche,
**dadurch gekennzeichnet, dass** als Schutzgas ein Edelgas oder Stickstoff oder ein Gasgemisch aus Edelgasen ggf. mit Stickstoff verwendet wird.

5. Verfahren nach einem der vorangegangenen Ansprüche,
**dadurch gekennzeichnet, dass** der Volumenstrom von Trägergas zu Schutzgas im Bereich von 1:2,5 bis 1:15 eingestellt wird.

## Claims

1. A method of welding metal sheets, especially sheets for a vehicle body shell, by using a laser beam and a pulverulent added material which is conveyed to the weld during the welding process in order to have an additional material available for the joint when the weld seam is made, the metal sheets being connected by a butt joint and the additional material being supplied by a carrier gas,
**characterised in that** the metal sheets are thin aluminium sheets and the stream of additional material, comprising of carrier gas and powder, is enclosed in a mantle of protective gas and the carrier gas is independent of the protective gas stream.

2. A method according to claim 1,
**characterised in that** the thin aluminium sheets are made of an aluminium alloy AlMgSi and the additional material is an aluminium powder AlSiₙ.

3. A method according to claim 1 or claim 2,
**characterised in that** the carrier gas is an inert gas or nitrogen.

4. A method according to any of the preceding claims,
**characterised in that** the protective gas is an inert gas or nitrogen or a mixture of inert gases, with nitrogen if required.

5. A method according to any of the preceding claims,
**characterised in that** the volume of the flow of carrier gas relative to protective gas is adjusted in the range from 1:2.5 to 1:15.

## Revendications

1. Méthode de soudage des tôles, en particulier des tôles de la peau externe d'une automobile, en utilisant un rayon laser et un métal d'apport pulvérulent amené pendant le soudage là ou s'effectue la soudure afin de disposer, lors de la réalisation du cordon de soudure, du matériau d'apport à l'endroit de la soudure, les tôles étant reliées entre elles par un joint raboté et le métal d'apport étant amené à l'aide d'un gaz porteur,
**caractérisée en ce que**
les tôles utilisées sont en aluminium et le courant de métal d'apport composé d'un gaz porteur et de poudre est entouré par une enveloppe de gaz de protection, le gaz porteur étant indépendant du courant de gaz de protection.

2. Méthode selon la revendication 1,
**caractérisée en ce que**
les tôles minces sont en alliage d'aluminium AlMgSi et de la poudre d'aluminium AlSiₙ est utilisée comme métal d'apport.

3. Méthode selon l'une quelconque des revendications 1 ou 2,
**caractérisée en ce que**
le gaz porteur utilisé est un gaz rare ou de l'azote.

4. Méthode selon l'une quelconque des revendications précédentes,
**caractérisée en ce que**
le gaz de protection utilisé est un gaz rare ou de l'azote ou un mélange de gaz rares éventuellement avec de l'azote.

5. Méthode selon l'une quelconque des revendications précédentes,
**caractérisée en ce que**
le courant volumique du gaz porteur par rapport au gaz de protection est réglé dans un rapport allant de 1:2,5 à 1:15.
